(19) Europäisches Patentamt
European Patent Office
Office européen des brevets

(11) Veröffentlichungsnummer: **0 453 895 B1**

# (12) EUROPÄISCHE PATENTSCHRIFT

(45) Veröffentlichungstag der Patentschrift: **21.12.94**

(51) Int. Cl.5: **C09B 62/245**

(21) Anmeldenummer: **91105826.1**

(22) Anmeldetag: **12.04.91**

## (54) Reaktivfarbstoffe.

(30) Priorität: **25.04.90 DE 4013140**

(43) Veröffentlichungstag der Anmeldung:
**30.10.91 Patentblatt 91/44**

(45) Bekanntmachung des Hinweises auf die Patenterteilung:
**21.12.94 Patentblatt 94/51**

(84) Benannte Vertragsstaaten:
**CH DE FR GB LI**

(56) Entgegenhaltungen:
**US-A- 4 007 164**

(73) Patentinhaber: **BAYER AG**
**D-51368 Leverkusen (DE)**

(72) Erfinder: **Herd, Karl Josef, Dr.**
**Am Gartenfeld 66**
**W-5068 Odenthal (DE)**
Erfinder: **Henk, Hermann, Dr.**
**Roggendorfstrasse 55**
**W-5000 Köln 80 (DE)**
Erfinder: **Schündehütte, Karl-Heinz, Prof. Dr.**
**Klief 75**
**W-5090 Leverkusen 3 (DE)**
Erfinder: **Stöhr, Frank-Michael, Dr.**
**Am Thelen Siefen 10**
**D-5068 Odenthal (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft neue faserreaktive Monoazofarbstoffe, Verfahren zu ihrer Herstellung und ihre Verwendung zum Färben und Bedrucken von hydroxyl- und amidgruppenhaltigen Materialien.

In US-A-4 007 164 sind bereits Reaktivfarbstoffe mit einer Pyrimidingruppe als Reaktivrest im allgemeinen beschrieben.

Die neuen Monoazofarbstoffe sind durch die Formel (I)

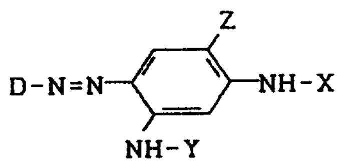

(I)

definiert, in welcher

D für den Rest einer sulfogruppenhaltigen Diazokomponente, beispielsweise einer solchen der Phenyl-, Biphenyl-, Naphthyl- oder Hetarylreihe steht,

Y für A, -COR oder $-SO_2R'$ steht,

X für Wasserstoff steht, für den Fall, daß Y für A steht oder

X für A steht, für den Fall, daß Y für -COR oder $-SO_2R'$ steht,

wobei

A für

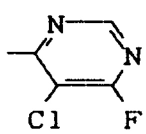

steht,

R für Wasserstoff, $-NH_2$, -NHR', -OR', Carboxy, -COOR', für jeweils gegebenenfalls durch Carboxy oder Sulfo substituiertes Phenyl oder Benzyl steht,

R' für jeweils gegebenenfalls substituiertes $C_1$-$C_6$-Alkyl, Cycloalkyl, Aralkyl oder Phenyl steht, und

Z für Wasserstoff steht, für den Fall, daß X für A steht und Y für -COR oder $SO_2R'$ steht, oder

Z für Sulfo oder Carboxy steht, für den Fall, daß X für Wasserstoff und Y für A steht,

Geeignete Substituenten für $C_1$-$C_6$-Alkyl in der Definition von R' sind beispielsweise OH, Cl, Br, -COOH, $C_1$-$C_4$-Alkoxy oder $-SO_3H$. Geeignete Substituenten für Phenyl in der Definition von R' sind beispielsweise $C_1$-$C_4$-Alkyl, Cl, Br, OH, -COOH, $C_1$-$C_4$-Alkoxy, $-NHCOC_1$-$C_4$-Alkyl oder $SO_3H$.

In der Definition von R' steht Cycloalkyl beispielsweise für Cyclohexyl, und gegebenenfalls substituiertes Aralkyl steht beispielsweise für gegebenenfalls substituiertes Phenyl-$C_1$-$C_4$-Alkyl, wobei als Phenylsubstituenten die oben genannten Phenylsubstituenten in Frage kommen.

D steht vorzugsweise für einen Rest der Formel

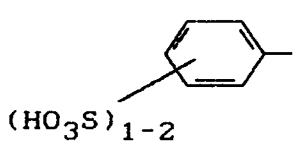

oder

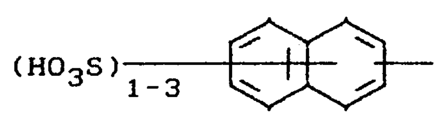

wobei die aromatischen Ringe gegebenenfalls durch Cl, Br, OH, COOH, $C_1$-$C_4$-Alkyl oder $C_1$-$C_4$-Alkoxy weitersubstituiert sind.

Bevorzugt sind Farbstoffe der Formel (II)

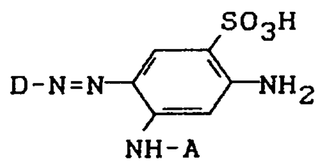

(II)

in welcher

A und D die oben angegebene Bedeutung haben.

Besonders bevorzugt sind Farbstoffe der Formel (III)

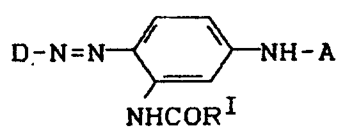

(III)

in welcher

D für

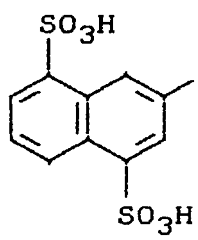

oder

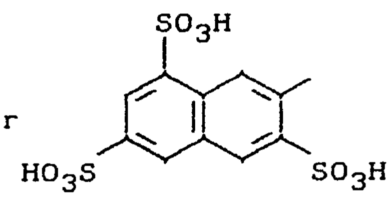

steht,

$R^I$ für Wasserstoff, $NH_2$, -NHR', für -OR', Carboxy, -COOR' oder für jeweils gegebenenfalls durch Carboxy oder Sulfo substituiertes Phenyl oder Benzyl steht, wobei

R' die oben angegebene Bedeutung hat, und

A die oben angegebene Bedeutung hat.

Ganz besonders bevorzugt sind Farbstoffe der Formel (III), in welcher

D für einen Rest der Formel

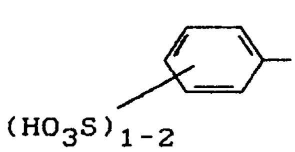

oder

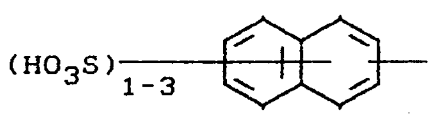

steht, wobei die aromatischen Ringe gegebenenfalls durch Cl, Br, OH, COOH, $C_1$-$C_4$-Alkyl oder $C_1$-$C_4$-Alkoxy weitersubstituiert sind, und

$R^I$ für $-NH_2$ oder Carboxy steht.

Besonders hervorzuheben sind Farbstoffe der Formel (IV)

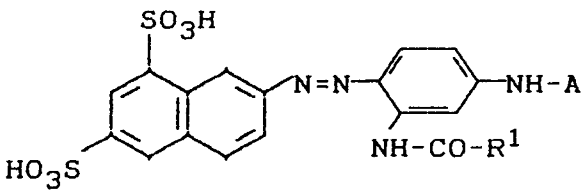

(IV)

worin

A die oben angegebene Bedeutung hat, und

$R^1$ für $NH_2$ oder $CO_2H$ steht,

der Formel (V)

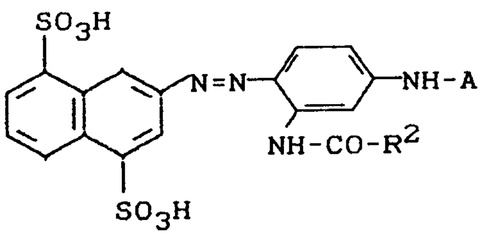

(V)

in welcher

A die oben angegebene Bedeutung hat und

$R^2$ für $NH_2$ oder $CO_2H$ steht,

sowie der Formel (VI)

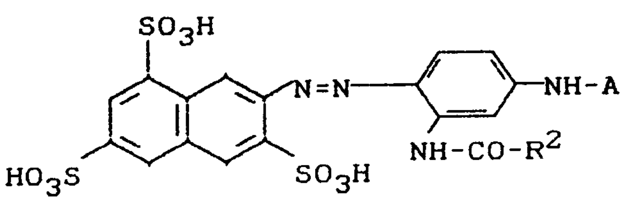

(VI)

in welcher

$R^2$ und A die oben angegebene Bedeutung haben.

Die Reaktivfarbstoffe der Formel (I) sind herstellbar, indem man entweder Farbbasen der Formel (VII)

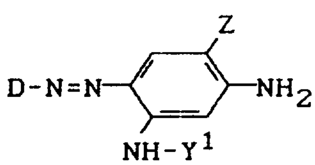

(VII)

in welcher

$Y^1$ für COR oder $SO_2R'$ steht, wobei

R und R' die oben angegebene Bedeutung haben, und

D die oben angegebene Bedeutung hat, mit der Reaktivkomponente der Formel (VIII)

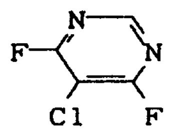

(VIII)

in Gegenwart säurebindender Mittel, wie beispielsweise Alkalihydroxyd oder Alkalicarbonat, kondensiert oder

indem man Diazokomponenten der Formel (IX)

$D-NH_2$ (IX)

in welcher

D die oben angegebene Bedeutung hat,

diazotiert und mit Verbindungen der Formel (X)

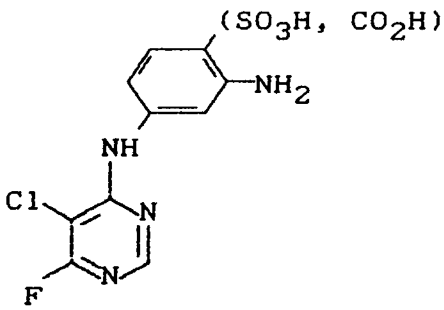

(X)

kuppelt.

Die neuen Farbstoffe eignen sich zum Färben und Bedrucken von hydroxyl- und amidgruppenhaltigen Materialien, insbesondere Cellulosematerialien. Sie zeichnen sich durch eine hohe Reaktivität und einen hohen Fixiergrad aus. Die mit diesen Farbstoffen erhältlichen Färbungen oder Drucke auf Cellulosematerialien zeichnen sich außerdem durch eine hohe Faser-Farbstoff-Bindungsstabilität sowie durch eine hervorragende Stabilität gegenüber Oxidationsmitteln, wie peroxid- oder chlorhaltigen Waschmitteln, aus. Die Auswaschbarkeit der beim Färben oder Druck nur in geringem Maße entstehenden Hydrolyseprodukte ist ausgezeichnet. Die Farbstoffe besitzen gute Naßechtheiten.

Die angegebenen Formeln sind die der freien Säuren. Bei der Herstellung werden im allgemeinen die Salze erhalten, insbesondere die Alkalisalze, wie Natrium-, Kalium- oder Lithiumsalze.

Die Farbstoffe können sowohl als Feststofformierungen als auch als konzentrierte Lösungen eingesetzt werden.

Die Herstellung und Verwendung soll anhand der nachfolgenden Beispiele erläutert werden.

Beispiel 1

23,6 g 7-Amino-1,3-naphthalindisulfonsäure-mono-Natriumsalz wurden in 150 ml Wasser/30 g Eis und 20 ml konzentrierter Salzsäure angerührt und bei 5-10 °C tropfenweise mit 17 ml einer wäßrigen Natriumnitritlösung (300 g $NaNO_2$/l) versetzt. Nach einer Stunde Rühren bei 5-10 °C wurde die überschüssige salpetrige Säure mit Amidosulfonsäure entfernt.

Diese cremefarbene Suspension dosierte man nun innerhalb von 30 Minuten zu einer neutralen Lösung der Kupplungskomponente, die aus 13,5 g N-(3-Aminophenyl)-oxalsäure-monoamid-hydrochlorid, 50 ml Wasser, 50 g Eis und ca. 30 ml einer 10 %igen wäßrigen Lithiumhydroxidlösung bereitet worden war. Dabei hielt man den pH-Wert der Reaktionsmischung mit 20 %iger wäßriger Kaliumhydrogencarbonatlösung konstant bei 6,0-6,5. Die Temperatur sollte nach Möglichkeit 10 °C nicht übersteigen. Nach erfolgter Zugabe rührte man 30 Minuten nach, wobei man den pH-Wert weiterhin konstant hielt.

Die rotbraune Kupplungslösung wurde mit 11,0 g 5-Chlor-4,6-difluorpyrimidin versetzt und langsam auf 40 °C erwärmt. Durch Zudosieren von Kaliumhydrogencarbonatlösung oder Sodalösung hielt man den pH-Wert konstant zwischen 6,0 bis 7,0. Es wurde ca. 3 Stunden bei 40 °C und nochmals 2 Stunden bei 60 °C und einem pH-Wert von 6 bis 7 gerührt. Danach versetzte man mit 30 g Kochsalz und kühlte auf 40 °C ab.

Der Farbstoff wurde durch Abnutschen isoliert.

Nach Trocknung bei 60 °C im Vakuum erhielt man 60 g eines salzhaltigen orangeroten Farbstoffpulvers der Formel

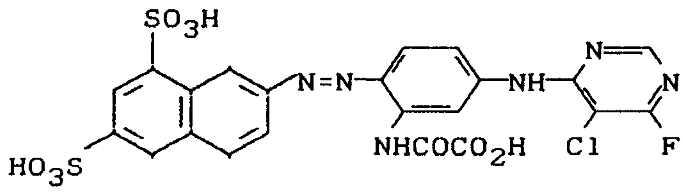

[$\lambda_{max}$ = 403 nm ($H_2O$)], das Baumwolle in brillanten, hochechten goldgelben Farbtönen färbt.

Durch Variation der Diazokomponente

$D-NH_2$ (IX)

bzw. der Kupplungskomponente waren in Analogie zu Beispiel 1 weitere wertvolle goldgelbe Reaktivfarbstoffe der Formel

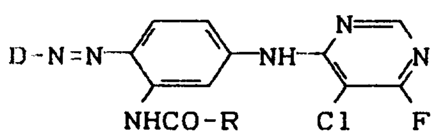

zugänglich.

**Tabelle 1**

| Bsp. | D | R | $\lambda_{max}$ |
|---|---|---|---|
| 2 | 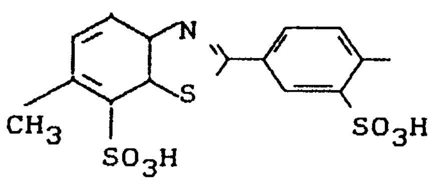 | $CO_2H$ | |

Tabelle 1 (Fortsetzung)

| Bsp. | D | R | $\lambda_{max}$ |
|---|---|---|---|
| 3 | 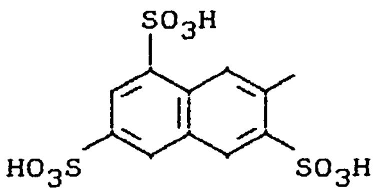 | 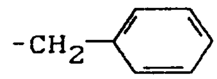 | |
| 4 | " | 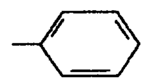 | |
| 5 | " | 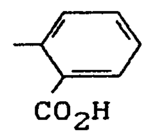 | |

Beispiel 6

Eine neutrale wäßrige Lösung von 30,9 g 2-Amino-3,6,8-naphthalintrisulfonsäure-dinatriumsalz und 6 g Natriumnitrit in 200 ml Wasser wurde innerhalb von 15 Minuten zu einer Mischung aus 40 ml konzentrierter Salzsäure, 50 g Eis und 50 ml Wasser zudosiert. Nach weiteren 30 Minuten Rühren bei 5 bis 10 °C war die Diazotierung beendet. Der Nitritüberschuß wurde mit Amidosulfonsäure entfernt.

Diese Suspension gab man nun innerhalb von 30 Minuten zu einer neutralen Suspension der Kupplungskomponente, die aus 13,5 g N-(3-Aminophenyl)-harnstoff und 100 ml Wasser bereitet worden war. Dabei hielt man den pH-Wert der Reaktionsmischung mit 20 %iger wäßriger Kaliumhydrogencarbonatlösung konstant bei 6,0 bis 6,5. Die Temperatur sollte nach Möglichkeit 15 °C nicht übersteigen. Nach erfolgter Zugabe rührte man 15 Minuten nach, wobei man den pH-Wert der orangeroten Lösung weiterhin konstant hielt.

Die Kupplungslösung wurde auf 40 bis 45 °C erwärmt und nach Zugabe von 0,5 g eines Emulgators mit 12,0 g 5-Chlor-4,6-difluorpyrimidin versetzt. Durch Zudosieren von Kaliumhydrogencarbonatlösung oder Sodalösung hielt man den pH-Wert konstant zwischen 6,0 bis 7,0. Es wurde ca. 3 Stunden bei 40 bis 45 °C und nochmals 2 Stunden bei 60 °C und einem pH-Wert von 6 bis 7 gerührt. Nach Zugabe von 5 g Aktivkohle wurde die Reaktionslösung bei 60 °C geklärt und anschließend mit 30 g Kochsalz ausgesalzen. Es wurde auf Raumtemperatur abgekühlt und der Farbstoff durch Abnutschen isoliert. Nach Trocknung erhielt man ca. 65 g eines salzhaltigen orangeroten Farbstoffpulvers der Formel

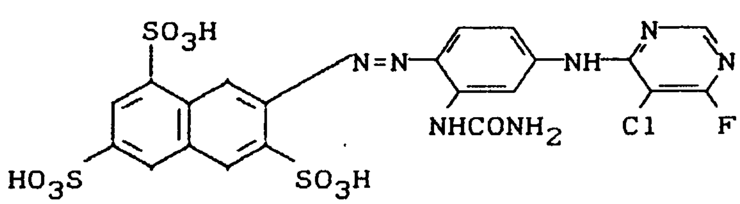

[$\lambda_{max}$ = 420 nm ($H_2O$)], das Baumwolle in brillanten hochechten goldgelben Farbtönen färbt. Beim Einsatz des Farbstoffes in einer Druckpaste lassen sich goldgelbe Reaktivdrucke auf Baumwolle oder Zellwolle anfertigen.

Durch Variation der Diazokomponente

$D\text{-}NH_2$ (IX)

wurden in Analogie zu Beispiel 6 folgende interessante Goldgelbfarbstoffe hergestellt:

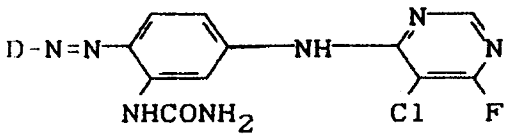

Tabelle 2

| Bsp. | D | $\lambda_{max}$ |
|---|---|---|
| 7 | 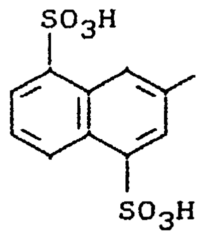 | 398 nm |
| 8 | 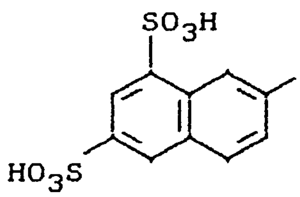 | 402 nm |
| 9 | 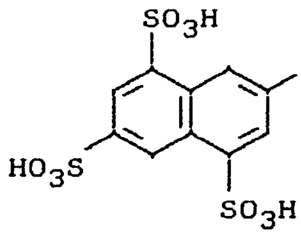 | |
| 10 | 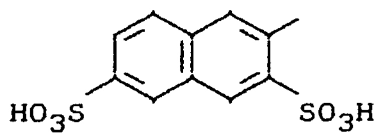 | |
| 11 | 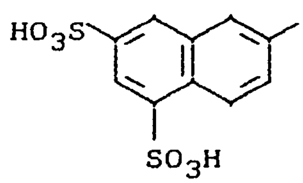 | |

Tabelle 2 (Fortsetzung)

| Bsp. | D | $\lambda_{max}$ |
|---|---|---|
| 12 | 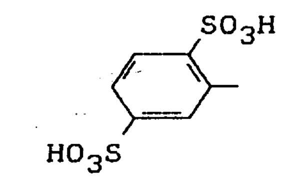 | |
| 13 | 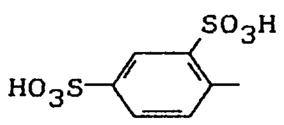 | |

Beispiel 14

23,6 g 7-Amino-1,3-naphthalindisulfonsäure-mono-Natriumsalz wurden, wie in Beispiel 1 beschrieben, diazotiert.

Die cremefarbene Suspension dosierte man nun innerhalb von 30 Minuten zu einer neutralen Lösung von 24,5 g der Kupplungskomponente der Formel

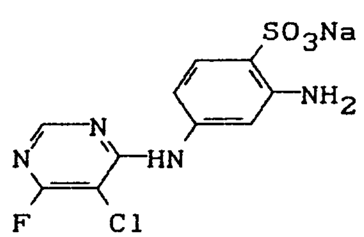

in 250 ml Wasser und hielt dabei mittels einer 10 %igen wäßrigen Lithiumhydroxidlösung den pH-Wert zwischen 5,5 bis 6,5. Es wurde ca. 2 Stunden bei diesem pH-Wert nachgerührt, bis die Kupplungsreaktion vollständig war. Die Farbstofflösung wurde mit 50 g Kaliumchlorid ausgesalzen und der Farbstoff durch Abnutschen isoliert.

Nach Trocknung erhielt man ein orangefarbenes Pulver, dem die Struktur

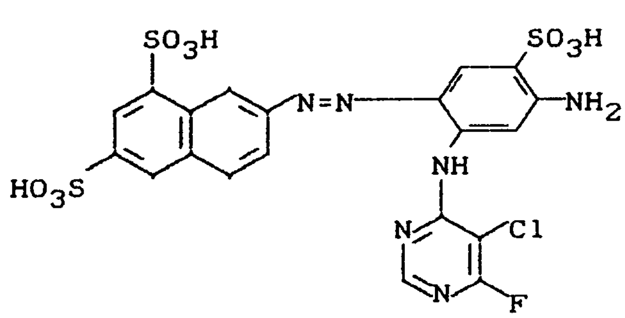

zukommt und welches Baumwolle in rotstichig gelben Nuancen färbt. Weitere wertvolle Reaktivfarbstoffe erhielt man, wenn man anstelle der 7-Amino-1,3-naphthalindisulfonsäure in Beispiel 14 andere sulfogruppenhaltige Diazokomponenten einsetzte.

Tabelle 3

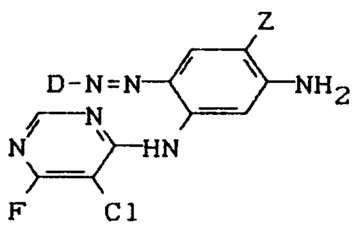

| Bsp. | D | Z |
|---|---|---|
| 15 | 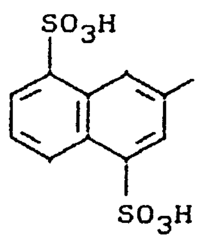 | $SO_3H$ |
| 16 | 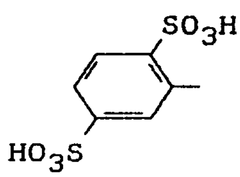 | $SO_3H$ |
| 17 | | $CO_2H$ |
| 18 | 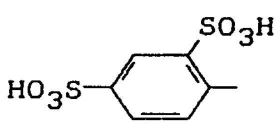 | $SO_3H$ |

## Patentansprüche

**1.** Farbstoffe der Formel

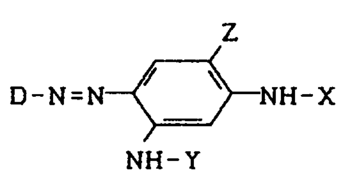

(I)

in welcher

D für den Rest einer sulfogruppenhaltigen Diazokomponente steht,

Y für A, -COR oder $-SO_2R'$ steht,

X für Wasserstoff steht, für den Fall, daß Y für A steht oder

X für A steht, für den Fall, daß Y für -COR oder $-SO_2R'$ steht, wobei

A für

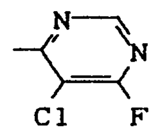

steht,

R für Wasserstoff, $-NH_2$, -NHR', -OR', Carboxy, -COOR', für jeweils gegebenenfalls durch Carboxy oder Sulfo substituiertes Phenyl oder Benzyl steht,

R' für jeweils gegebenenfalls substituiertes $C_1$-$C_6$-Alkyl, Cycloalkyl, Aralkyl oder Phenyl steht, und

Z für Wasserstoff steht, für den Fall, daß X für A steht und Y für -COR oder $SO_2R'$ steht, oder

Z für Sulfo oder Carboxy steht, für den Fall, daß X für Wasserstoff und Y für A steht,

**2.** Farbstoffe gemäß Anspruch 1, in welchen

D für einen Rest der Formel

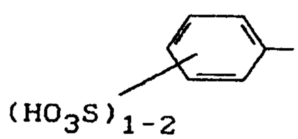

oder

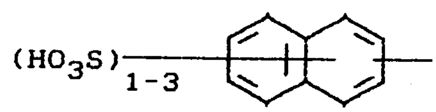

steht,

wobei die aromatischen Ringe gegebenenfalls durch Cl, Br, OH, $CO_2H$, $C_1$-$C_4$-Alkyl oder $C_1$-$C_4$-Alkoxy weitersubstituiert sind,

**3.** Farbstoffe der Formel

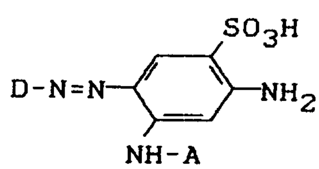

(II)

gemäß den Ansprüchen 1 und 2.

**4.** Farbstoffe gemäß dem Anspruch 1 der Formel

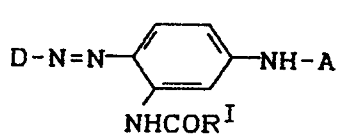

(III)

in welcher

D für

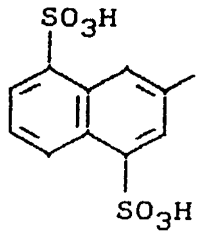

oder

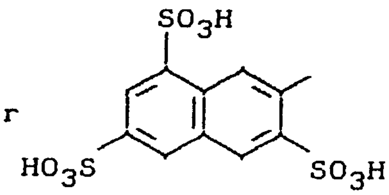

steht,

$R^I$ für Wasserstoff, $NH_2$, -NHR', für -OR', Carboxy, -COOR' oder für jeweils gegebenenfalls durch Carboxy oder Sulfo substituiertes Phenyl oder Benzyl steht,

**5.** Farbstoffe gemäß Anspruch 4 in welchen

D für einen Rest der Formel

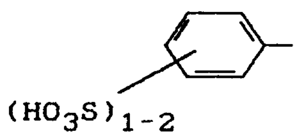

oder

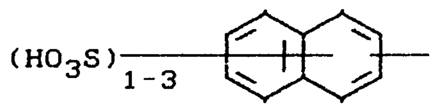

steht,

wobei die aromatischen Ringe gegebenenfalls durch Cl, Br, OH, COOH, $C_1$-$C_4$-Alkyl oder $C_1$-$C_4$-Alkoxy weitersubstituiert sind, und

$R^I$ für $-NH_2$ oder Carboxy steht.

**6.** Farbstoffe gemäß dem Anspruch 1 der Formel

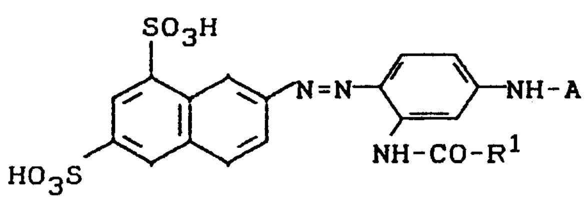

(IV)

in welcher

$R^1$ für $-NH_2$ oder Carboxy steht,

**7.** Farbstoffe gemäß Anspruch 4 der Formel

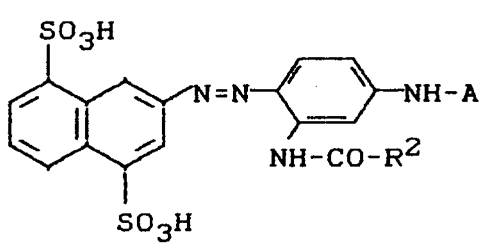

(V)

in welcher

$R^2$ für $-NH_2$ oder Carboxy steht.

**8.** Farbstoffe gemäß Anspruch 4 der Formel

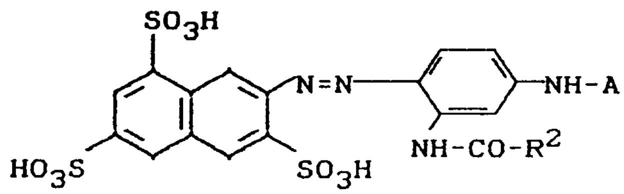 (VI)

in welcher

$R^2$ die unter Anspruch 7 gegebene Bedeutung hat.

**9.** Verwendung der Farbstoffe gemäß den Ansprüchen 1 bis 8 zum Färben oder Bedrucken natürlicher oder synthetischer hydroxyl- oder amidgruppenhaltiger Materialien.

**10.** Mit Farbstoffen der Ansprüche 1 bis 8 gefärbte oder bedruckte, natürliche oder synthetische hydroxyl- oder amidgruppenhaltige Materialien.

**11.** Farbstoff gemäß Anspruch 1 der Formel

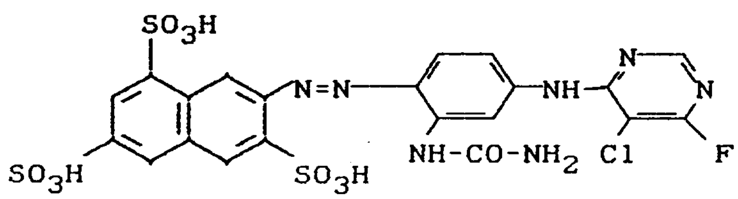

**12.** Farbstoff gemäß Anspruch 1 der Formel

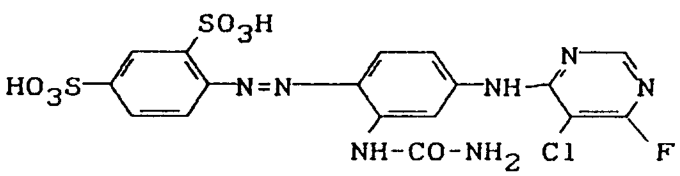

## Claims

**1.** Dyestuffs of the formula

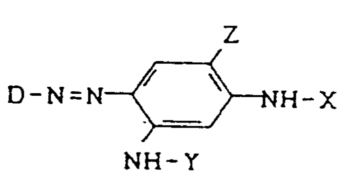 (I)

in which

D represents the radical of a sulpho-containing diazo component,

Y represents A, -COR or $-SO_2R'$,

X represents hydrogen, in the case where Y represents A or

X represents A, in the case where Y represents -COR or $-SO_2R'$,

in which

A represents

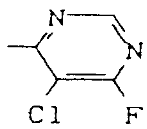

,

R represents hydrogen, $-NH_2$, -NHR', -OR', carboxyl, -COOR', or represents phenyl or benzyl, each of which is unsubstituted or substituted by carboxyl or sulpho,

R' represents $C_1$-$C_6$-alkyl, cycloalkyl, aralkyl or phenyl, each of which is unsubstituted or substituted, and

Z represents hydrogen, in the case where X represents A and Y represents -COR or $SO_2R'$, or

Z represents sulpho or carboxyl, in the case where X represents hydrogen and Y represents A.

**2.** Dyestuffs according to Claim 1, in which

D represents a radical of the formula

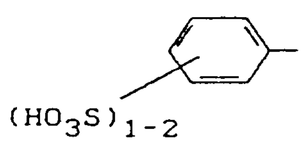

or

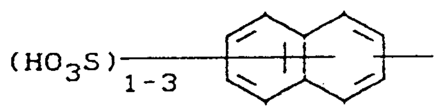

,

in which the aromatic rings are, if desired, further substituted by Cl, Br, OH, $CO_2H$, $C_1$-$C_4$-alkyl or $C_1$-$C_4$-alkoxy.

**3.** Dyestuffs of the formula

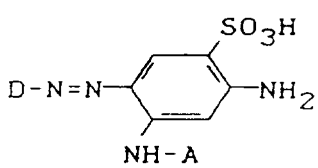

(II)

according to Claims 1 and 2.

**4.** Dyestuffs according to Claim 1 of the formula

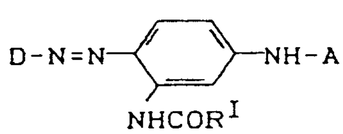

(III)

in which

D represents

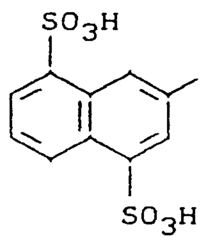 or 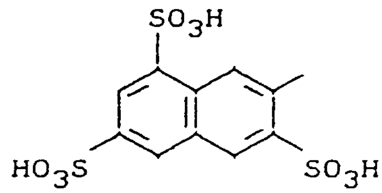 ,

$R^1$ represents hydrogen, $NH_2$, -NHR', -OR', carboxyl, -COOR' or phenyl or benzyl, each of which is unsubstituted or substituted by carboxyl or sulpho.

**5.** Dyestuffs according to Claim 4, in which
D represents a radical of the formula

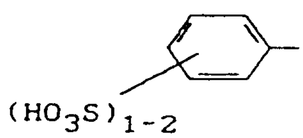 or 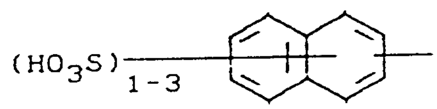 ,

in which the aromatic rings are, if desired, further substituted by Cl, Br, OH, COOH $C_1$-$C_4$-alkyl or $C_1$-$C_4$-alkoxy, and
$R^1$ represents $-NH_2$ or carboxyl.

**6.** Dyestuffs according to Claim 1 of the formula

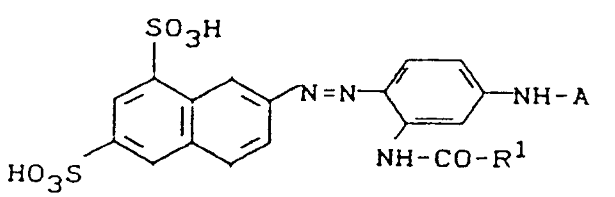 (IV)

in which
$R^1$ represents $-NH_2$, or carboxyl.

**7.** Dyestuffs according to Claim 4 of the formula

(V)

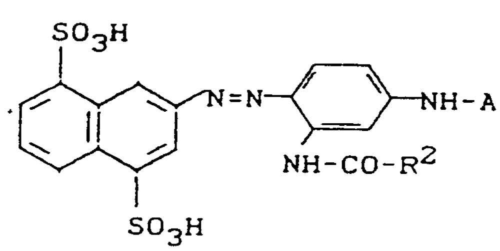

in which
$R^2$ represents $-NH_2$ or carboxyl.

**8.** Dyestuffs according to Claim 4 of the formula

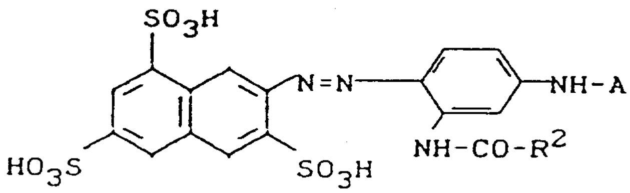

(VI)

in which

R² has the meaning given in Claim 7.

**9.** Use of the dyestuffs according to Claims 1 to 8 for the dyeing or printing of natural or synthetic hydroxyl- or amido-containing materials.

**10.** Natural or synthetic hydroxyl- or amido-containing materials dyed or printed with dyestuffs of Claims 1 to 8.

**11.** Dyestuff according to Claim 1 of the formula

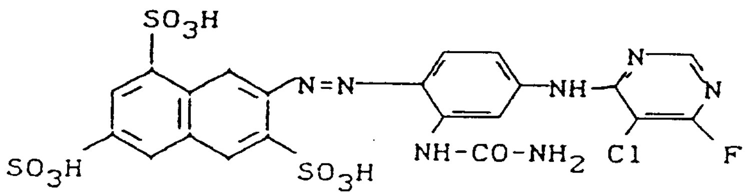

**12.** Dyestuff according to Claim 1 of the formula

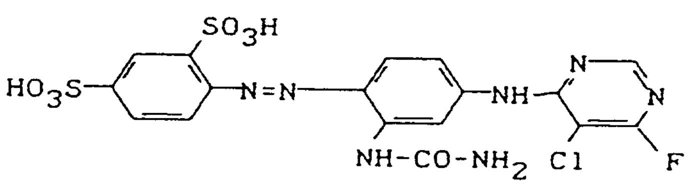

**Revendications**

**1.** Colorants de formule :

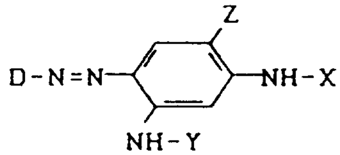

(I)

dans laquelle

D représente le reste d'un composant diazotable contenant des groupes sulfo;

Y représente A, -COR ou $-SO_2R'$,

X représente un atome d'hydrogène, au cas ou Y représente A ou bien X représente A, au cas ou

Y représente -COR ou $-SO_2R'$, et

A représente,

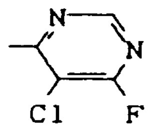

R représente un atome d'hydrogène, un groupe $-NH_2$, -NHR', -OR', carboxy, -COOR', un groupe phényle ou benzyle chaque fois éventuellement substitué par un groupe carboxy ou sulfo,

R' représente un groupe alkyle en $C_1$-$C_6$, cycloalkyle, aralkyle ou phényle, chacun étant éventuellement substitué, et

Z représente un atome d'hydrogène si X représente A et si Y représente -COR ou $-SO_2R'$, ou bien

Z représente un groupe sulfo carboxy, si X représente un atome d'hydrogène et si Y représente A.

**2.** Colorants selon la revendication 1, dans lesquels,

D représente un reste de formule

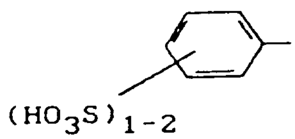

ou

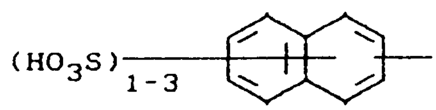

où les noyaux aromatiques peuvent éventuellement être encore substitués par Cl, Br, OH, COOH, un reste alkyle en $C_1$-$C_4$ ou alcoxy en $C_1$-$C_4$.

**3.** Colorants de formule (II)

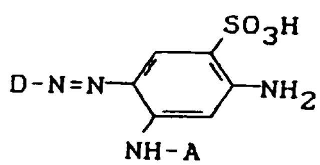

(II)

selon les revendications 1 et 2.

**4.** Colorants selon la revendication 1, de formule :

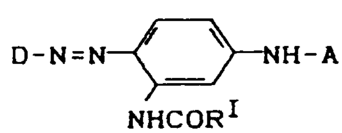

(III)

dans laquelle

D représente

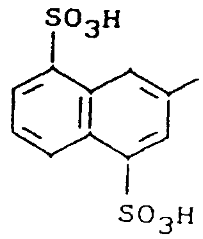

ou

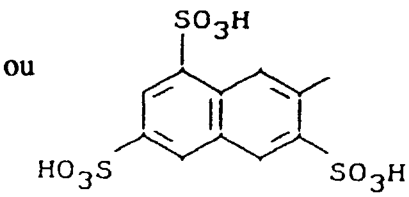

$R^1$ représente un atome d'hydrogène ou un groupe $NH_2$, -NHR', -OR', un groupe carboxy, -COOR' ou un groupe phényle ou benzyle chaque fois éventuellement substitué par un reste carboxy ou sulfo,

**5.** Colorants selon la revendication 4, dans lesquels

D représente un reste de formule

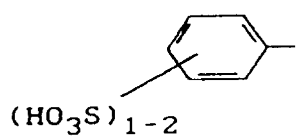

ou

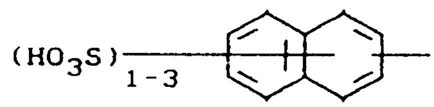

les noyaux aromatiques étant éventuellement encore substitués par Cl, Br, OH, COOH, un reste alkyle en $C_1$-$C_4$ ou alcoxy en $C_1$-$C_4$, et

$R^1$ représente un groupe $-NH_2$ ou un groupe carboxy.

**6.** Colorants selon la revendication 1, de formule

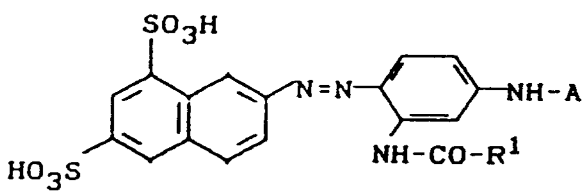

(IV)

dans laquelle

$R^1$ représente un groupe $-NH_2$ ou carboxy.

**7.** Colorants selon la revendication 4, de formule :

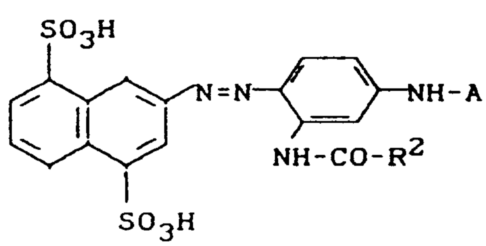

(V)

dans laquelle

$R^2$ représente un groupe $-NH_2$ ou carboxy.

**8.** Colorants selon la revendication 4, de formule

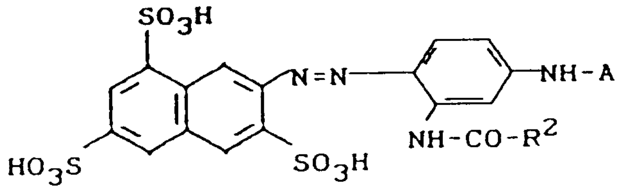 (VI)

dans laquelle

$R^2$ a le sens indiqué à la revendication 7.

**9.** Utilisation de colorants selon les revendications 1 à 8 pour teindre ou imprimer des matières naturelles ou synthétiques contenant des groupes hydroxyles ou amides.

**10.** Matières naturelles ou synthétiques, contenant des groupes hydroxyles ou amides, teintes ou imprimées à l'aide de colorants selon les revendications 1 et 8.

**11.** Colorant selon la revendication 1, de formule

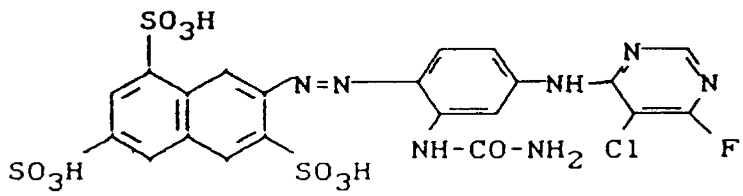

**12.** Colorant selon la revendication 1, de formule